Europäisches Patentamt

European Patent Office

Office européen des brevets

(11) Publication number: **0 273 766 B1**

# EUROPEAN PATENT SPECIFICATION

(45) Date of publication of patent specification: **08.03.95**

(21) Application number: **87311502.6**

(22) Date of filing: **29.12.87**

(51) Int. Cl.⁶: **C08K 13/02**, C08L 27/06,
//(C08K13/02,3:24,5:02)

(54) Polyvinyl chloride molding powder.

(30) Priority: **29.12.86 JP 311269/86**

(43) Date of publication of application:
**06.07.88 Bulletin 88/27**

(45) Publication of the grant of the patent:
**08.03.95 Bulletin 95/10**

(84) Designated Contracting States:
**BE DE FR GB IT NL**

(56) References cited:

**CHEMICAL ABSTRACTS, vol. 89, 10th July
1978, page 39, abstract no. 7120k, Columbus,
Ohio, US; & JP-A-78 16 750**

**CHEMICAL ABSTRACTS, vol. 101, 26th No-
vember 1984, page 47, abstract no. 193161p,
Columbus, Ohio, US; & JP-A-59 140 261**

**CHEMICAL ABSTRACTS, vol. 104, 19th May
1986, page 46, abstract no. 169545h, Colum-
bus, Ohio, US; & JP-A-60 219 247**

(73) Proprietor: **SUMITOMO CHEMICAL COMPANY,
LIMITED
Kitahama 4-chome 5-33**
Chuo-ku
**Osaka 541 (JP)**

(72) Inventor: **Kobayashi, Masanori
1-17-9, Kiyomidai
Kawachinagano
Osaka-fu (JP)**
Inventor: **Matsuura, Isao
4-5-5-303, Kamihamuro
Takatsuki
Osaka-fu (JP)**
Inventor: **Wakatsuki, Akira
2-1-132, Kuwatacho
Ibaraki
Osaka-fu (JP)**
Inventor: **Shida, Yu
1-9-1-208, Tamagawa
Takatsuki
Osaka-fu (JP)**

(74) Representative: **Geering, Keith Edwin et al
REDDIE & GROSE
16 Theobalds Road
London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 273 766 B1

## Description

The present invention relates to a polyvinyl chloride resin composition for powder molding (especially for powder rotational molding or powder slush molding) useful particularly to produce covering materials for automobile interior parts such as crash pads, arm rests, head rests, console boxes, meter covers, door trims, etc.

In recent years, for such covering materials for automobile interior parts, those which are light, of soft feel and have embossed or stitched patterns giving a high grade surface effect have come into increased demand.

Hitherto, covering materials having included vacuum-formed soft sheet materials composed mainly of polyvinyl chloride resin and ABS resin, and rotational-molded or slush-molded products of a sol composed mainly of polyvinyl chloride resin paste with plasticizer (hereinafter referred to as sol molded product).

The vacuum-formed product is light, but it is of stiff rather than soft feel. Further, it is difficult to fabricate into products of complicated shape having embossed or stitched surface patterns.

Further the vacuum-formed product has the drawback that, because of its large residual strain on forming, cracks tend to form on long-term use.

On the other hand, the sol molded product has a soft feel, but the sol, because of its low gelation temperature, rapidly melts in the mold so that phenomena such as formation of flow marks, lip, stringiness of sol, etc. occur.

For this reason, the sol molded product has drawbacks that its inside surface lacks smoothness, discharge of the sol from the mold takes too long, and the thickness of the covering material becomes undesirably large.

Further, the sol has the problems that a great deal of labor is required to clean tanks, pipes, etc. for change of color, and that the viscosity changes with time so that the sol cannot be stored long-term.

In recent years, powder molding has attracted attention to solve these drawbacks and problems.

Generally, powder molding methods include fluidized bed coating, electrostatic coating, powder flame spray coating, powder rotational molding, powder slush molding techniques and the like. Particularly, the powder rotational molding and powder slush molding techniques are suitable for producing covering materials for automobile inner parts.

Powder rotational molding or powder slush molding are methods in which, by rotating or shaking an assembled unit of a mold kept at a temperature of 180°C or higher and a resin powder supply box, or injecting a resin powder into the mold, the resin powder is melt-attached or fused onto the inner surface of the mold, and the residual unfused powder is recovered automatically or forcedly into the box.

For heating the mold in powder molding, there may be used a gas furnace, circulation of a heat medium oil, dipping into a heat medium oil or heated flowing sand, high-frequency induction heating, etc.

The powder composition to be used in such powder molding should be of good flowability and moldability.

It is well known to prepare a powder composition by dry-blending a polyvinyl chloride resin with a plasticizer, stabilizer, pigment, etc. on a blender or high-speed rotating mixer equipped with a heating jacket.

In order to improve the flowability, it is also well known to add a finely powdered polyvinyl chloride resin and an inorganic filler such as finely powdered calcium carbonate, silica, etc. at the cooling step after completion of the dry-blending (Rubber Digest, Vol. 14, No. 8, pp. 32 - 40; polyvinyl Chloride - Its Chemistry and Industry II, pp. 367 - 370, 1968; and Japanese Patent Publication No. 1575/1962).

There is a great need for a powder composition for producing covering materials by powder molding, which has reduced tendency to mold staining during powder molding (hereinafter referred to as resistance to mold staining), preferably with resistance to amine staining which occurs on attachment of urethane material to the covering material (hereinafter referred to as amine resistance).

Powder molding is carried out by melt-attaching or fusing a powder composition onto the surface of a mold kept at a high temperature as described above, so that the surface of the mold is gradually stained as the number of molding shots increases.

When staining of the mold proceeds, the hollows of the embossed pattern on the inner surface of the mold become shallow because of accumulation of stain, and the resulting covering material becomes undesirably glossy. Also, when stain on the mold contains tacky substances, it becomes difficult to remove the formed covering material from the mold, and in some cases, undesirable hollows are formed on the surface of the covering material.

Consequently, it becomes necessary to suspend molding operations for cleaning the mold, as a result of which productivity is markedly reduced. Also, extra labor and chemicals (alkali solutions, acid solutions,

EP 0 273 766 B1

halogenated hydrocarbon solvents used for cleaning) are required for cleaning. Further, when stain is too heavy to remove by simple cleaning, mechanical brushing (brass brushing, brushing with a forced jet of fine glass beads and air) is required. When such brushing is applied frequently, the life of the mold is shortened.

It becomes therefore very important industrially and economically to provide a powder composition which is superior in resistance to mold staining.

Compositions of the present invention can be used to produce automobile interior parts, etc.; such interior parts are frequently used in combination with urethane, so that it is important for them to be resistant do discoloration by amines owing to urethane.

The present invention provides a polyvinyl chloride resin composition for powder molding having amine resistance and resistance to mold staining, the composition having blended therein, per 100 parts by weight of polyvinyl chloride resin, (a) 0.1 to 10 parts by weight a stabilizer mixture of barium and zinc carboxylic acid salts each having a melting point not lower than 250°C, the barium and zinc metallic weight ratio being 1:5 to 5:1, and (b) 0.1 to 10 parts by weight of metal perchlorate and/or perchlorate ion hydrotalcite compound selected from those of the formula:

$$Mg_{1-x}Al_x(OH)_2.(ClO_4)_2.mH_2O$$

wherein x is a number satisfying the equation $0 < x \leq 0.5$ and m represents a positive number of 5 or less.

The invention is characterised by use of barium and zinc carboxylic acid salts each having a melting point not lower than 250 °C.

Hitherto, carboxylic metal soap stabilizers generally had melting points below 250°C. For example, metal soap type stabilizers such as stearate, palmitate, laurate, caprylate, oleate, linolate, ricinoleate, hydroxystearate, etc. have poor compatibility with polyvinyl chloride resins when they are used in powder molding wherein no shear is applied, and also they have a lubricating action, so that "plate out" easily occurs to give heavy stains to the mold. Further, such metal soap stabilisers cause white powder to break out on the surface of the molded product (blooming) with lapse of time. These stabilizers, therefore, are not suitable for powder molding.

Metal soap stabilizers of fatty acids having alkyl groups of 5 to 8 carbon atoms as nonanoate, octanoate, heptanoate, hexanoate, etc (for example the barium and zinc salts of these acids) give fairly improved resistance to mold staining. However, as the practical use of powder molding has developed, the required level of resistance to mold staining has risen so markedly that these stabilizers are now not always satisfactory. It is desired to further reduce mold washing or keep the generation of gloss on continuously molded covering materials at a lower level.

With the foregoing metal soal stabilizers of fatty acids having $C_5$-$C_8$ alkyl groups, 100-shot continuous molding is usually the limit, in view of the degree of mold staining and of generation of gloss on the molded product.

We have sought a stabilizer which resists mold staining and has low tendency to generate gloss on the molded covering material, and have accomplished this object by a metal soap type stabilizer which is a metal carboxylic acid salt having a melting point not lower than 250°C.

In powder molding, particularly powder rotational molding or powder slush molding with a powdery polyvinyl chloride resin composition, the composition is fusion-adhered to a mold kept at a temperature of from 180° to 250°C. When the temperature of the mold is lower than 180°C, fusion of the power is insufficient and hollows and pin holes are formed on the surface of the covering material; when the temperature of the mold exceeds 250°C the covering material undergoes marked discoloration and thermal decomposition.

Metal soap stabilizers of fatty acids having $C_5$-$C_8$ alkyl groups are liquid and well compatible with plasticizers. Consequently, when a powdery composition containing such plasticizer is fusion-adhered to a mold in this temperature range, the plasticizer bleeds out toward the surface of the mold; a trace amount of the liquid stabilizer bleeds out together with the bleeding plasticizer. Upon further continuous molding, the stabilizer which has bled accumulates on the mold to undergo a change in quality and decomposition.

When such staining of the mold occurs, the hollows of the embossed pattern on the inner surface of the mold become shallow, and the surface of the covering material becomes smooth to promote the generation of gloss. Further, the stain on the mold is transferred to stain the covering material.

The metal soap type stabilizer used in this invention, which is a carboxylic acid metal salt having a melting point not lower than 250°C, is insoluble in plasticizers and, at a mold temperature of from 180° to 250°C, does not bleed out together with the bleeding plasticizer; as a result accumulation of stain on the mold and generation of gloss on the covering material are reduced.

3

Amongst the stabilizers which can be used according to the present invention, the following examples may be given (m.p. checked by an electro-heating block melting point measuring instrument-produced by Yanagimoto Seisakusho Co.,Ltd.). Thus suitable barium salts include the oxalate, malonate, maleate, tartrate, benzoate, p-tert-butylbenzoate, succinate, glutarate, adipate, pimelate, suberate, azelate, sebacate, paratartrate, malate, acrylate, methacrylate, phthalate, isophthalate, terephthalate, salicylate, anthranilate, cinnamate, mandelate, $\alpha$-naphthoate and $\beta$-naphthoate, etc. Suitable zinc salts include the oxalate, malonate, maleate, tartrate, benzoate, p-tert-butylbenzoate, succinate, glutarate, adipate, pimelate, suberate, azelate, sebacate, paratartrate, malate, cinnamate, mandelate, $\alpha$-naphthoate and $\beta$-naphthoate, etc.

The barium and zinc salts are used in combination, and a preferred barium to zinc metallic weight ratio is from 1:5 to 5:1, particularly preferably from 1:3 to 5:1.

When this ratio is below 1:5, there is a danger of the dehydrochlorinating action of zinc increasing to lower the thermal resistance during molding, with black spots and foams being formed on the product covering material. Such excessive amount of zinc is therefore not preferred. When this ratio is over 5:1, a tendency for the covering material to be colored, particularly red, at the initial stage of molding becomes marked. As a result, the color of the formed covering material may deviate from that desired, which is not preferred in terms of color matching.

The amount of the foregoing barium-zinc salt type stabilizer mixture used is preferably from 0.1 to 10, more preferably from 0.5 to 5,parts by weight based on 100 parts by weight of polyvinyl chloride resin. When said amount is less than 0.1 part by weight, the thermal resistance of the composition during molding may be poor, while when it is larger than 10 parts by weight, the strength of the covering material may be too low for practical use and the cost may be economically disadvantageous.

The compositions of the present invention are also of excellent amine resistance. This characteristic is particularly useful when urethane is injected into a molded product obtained from the composition of the present invention and then foamed. In such urethane foaming in situ, amine compounds are used as a catalysts; these include ethylenediamine, triethylenediamine, triethylenetetramine, triethanolamine, etc. (alone or in combination),and their addition products with alkylene oxides such as ethylene oxide, propylene oxide, butylene oxide, epichlorohydrin, styrene oxide, etc. However, these amine compounds, upon contact with the polyvinyl chloride covering material, cause a very rapid discoloration of the material particularly in the presence of heat and light, and promote deterioration and change in quality of the polyvinyl chloride resin.

We appreciated that, in powder rotational molding and powder slush molding, it is industrially and economically important to make excellent resistance to mold staining and excellent amine resistance compatible with each other, and that a lack of either of these two properties vitiates providing the covering material by powder molding. We have achieved this compatibility by combining the mixed barium and zinc salt type stabilizers with metal perchlorate and/or perchlorate ion type hydrotalcite compound.

In the course of the conventional development of powder compositions of excellent amine resistance, it was thought that what prevents color change by the action of amine is the chelation of a zinc-containing stabilizer and an amine which inhibits the dehydrochlorinating action of the amine, or a complementary relationship which applied between the color of the chelate compound and the color peculiar to a complex compound produced by the reaction of polyvinyl chloride resin with the amine.

Previously, we found that a magnesium compound has discoloration preventing ability in the thermal resistance and light fastness tests on the urethane-attached covering material (Japanese Application 16594/1984 - EP-A-0151040). Because covering material has come to be produced in smaller thickness by powder molding, the demand for amine resistance has become stronger; the same discoloratation level as required for conventional covering material 1 mm thick produced by powder molding is now also required for covering materials from 0.5 to 0.8 mm thick. Consequently, disadvantages arise from merely using the magnesium-containing stabilizer as before.

We use metal perchlorate and/or perchlorate ion type hydrotalcite compound for the prevention of discoloration caused by amine compounds, particularly tertiary amine compounds. Suitable metal perchlorates include barium perchlorate, magnesium perchlorate, aluminium perchlorate, sodium perchlorate.

The perchlorate ion type hydrotalcite compound usable in the present invention can be produced by contacting a hydrotalcite compound represented by the formula (I),

$$\text{Mg}_{1-x}\text{Al}_x(\text{OH})_2 \cdot (\text{CO}_3)_{x/2} \cdot m\text{H}_2\text{O} \qquad \text{(I)}$$

wherein m represents a positive number and x is a number satisfying the equation, $0 < x \leqq 0.5$, with an aqueous perchloric acid solution to replace ($\text{CO}_3$) in the formula (I) with $(\text{ClO}_4)_2^{2-}$, and it has the following formula (II),

4

$$Mg_{1-x}Al_x(OH)_2 \cdot (ClO_4)_2 \cdot mH_2O \qquad (II)$$

wherein x and m are as defined above.

The hydrotalcite compound is excellent in halogen-catching ability, but its ability is so large that, in severe conditions, it promotes dehydrochlorination from, for example, polyvinyl chloride resins, as a result of which coloration owing to the formation of polyenes is markedly promoted. Also, the amine resistance of the urethane-attached polyvinyl chloride sheet is insufficient.

We found that the perchlorate and perchlorate ion type hydrotalcite compound give excellent amine resistance particularly to the urethane-attached polyvinyl chloride sheet. What mechanism this effect is based on is not clear, but it is considered to be based on two actions, one being an action to reduce coloration owing to polyenes produced by the dehydrochlorination of polyvinyl chloride resin, and the other being an action, which results from the formation of a complex of the perchlorate ion with the amine, to reduce the dehydrochlorination of a polyvinyl chloride resin.

The amount of the perchlorate and/or perchlorate ion type hydrotalcite compound used in the present invention is preferably from 0.1 to 10, more preferably from 0.5 to 5,parts by weight based on 100 parts by weight of the polyvinyl chloride resin.

When said amount is less than 0.1 part by weight, the amine resistance is poor, while when it is larger than 10 parts by weight, the sheet strength of the formed covering material is low, and the cost becomes high, being economically disadvantageous.

Thus, the present invention can solve two important problems at the same time, i.e. improvement in the resistance to mold staining during powder molding and in amine resistance of the urethane-attached polyvinyl chloride sheet, by combining the foregoing barium-zinc salt type stabilizer with the perchlorate and/or perchlorate ion type hydrotalcite compound. Any of these stabilizers and compounds may be added separatedly, but they are preferably added as a mixed dispersion in a plasticizer.

The resin composition may also include stabilizer such as calcium oleate, magnesium oxide, magnesium hydroxide, hydrotalcite compounds, zinc oxide, barium oxide, calcium oxide, barium phosphate, etc. Further, there may be used phenolic antioxidants, thioether antioxidants, hindered amine compounds, phosphite compounds, diketo compounds, ultraviolet absorbers (e.g. salicylate compounds, benzophenone compounds, benzotriazole compounds), epoxidized soybean oil, epoxidized compounds synthesized from bisphenol A and epichlorohydrin, etc.

The polyvinyl chloride resins used in the present invention include those produced by suspension polymerization, bulk polymerization or emulsion polymerization, and examples are vinyl chloride polymers, copolymers of vinyl chloride with compound(s) copolymerizable therewith (such as ethylene, propylene, vinyl acetate, etc), graft copolymers of ethylene/vinyl acetate copolymer with vinyl chloride, and mixtures of two or more of these. However, the polyvinyl chloride resins for the present invention are not limited to these.

Plasticizers usable in the present invention include phthalic esters such as diisodecyl phthalate, diisoundecyl phthalate, di($C_9$-$C_{11}$)alkyl phthalates, etc., and trimellitic esters such as trioctyl trimellitate, tri-2-ethylhexyl trimellitate, tridecyl trimellitate, tri($C_7$-$C_9$ or $C_7$-$C_{11}$)alkyl trimellitates, etc.

Also, it is possible to use a small amount of epoxy plasticizers, polyester plasticizers, etc. The plasticizer used in the present invention, however, is not limited to these ones.

To the polyvinyl chloride resin composition of the present invention may be added filler and various auxilliaries in addition to the plasticizer, stabilizer and pigment, as need arises.

For the polyol, catalyst, foaming agent, polyisocyanate, etc. for in situ urethane foaming of the present invention, the well-known ones commonly used in the production of polyurethane foams are suitable.

In powder molding, the composition of the present invention can be used for continuous molding of more than 300 shots. Besides, the composition is superior to the conventional ones in that generation of gloss on the surface of the resulting molded product is suppressed to a very low level.

Also, when the molded product of said composition is formed, together with a polyurethane foam, into a laminated product, the amine resistance of the composition is very good. This amine resistance, in cooperation with the excellent resistance to mold staining described above, enables the composition of the present invention to provide very wide applications in the form of automobile interior parts, industrial parts, etc.

Examples 1 to 18 and Comparative examples 1 to 5

Examples of the present invention will are given below,but the present invention is not limited to these examples.

(1) Preparation of a composition for powder molding

To a 20-liter super-mixer was charged 2 kg of a straight polyvinyl chloride resin having an average degree of polymerization of 700 produced by the usual suspension polymerization (Sumilit® SX-7GL; produced by Sumitomo Chemical Co., Ltd.). The resin was stirred at a definite rotation speed, and when the resin temperature reached 80°C, was dry-blended with plasticizer, stabilizer previously dispersed in the plasticizer, pigment and epoxidized soybean oil. When the dry-blend temperature reached 122°C, heating steam was shut off, and after completion of dry-blending, the dry blend was cooled to 50°C or lower by water cooling. Thereafter, 200 g of a finely powdered polyvinyl chloride resin (produced by Sumitomo Chemical Co., Ltd.) was uniformly dispersed in the resulting dry blend to obtain a powdery composition of good flowability.

In producing powder compositions of the present invention, the additives were blended in the ratios shown in Table 1 with the total of the straight polyvinyl chloride resin and finely powdered polyvinyl chloride resin as 100 parts by weight. The amount of the stabilizer added is shown in Table 2 for Examples 1 to 18, and in Table 3 for Comparative examples 1 to 5.

Table 1

Composition of powder composition

| | | |
|---|---|---|
| Straight polyvinyl chloride resin | 90 Parts by weight | Sumilit® SX-7GL (produced by Sumitomo Chemical Co., Ltd.) |
| Finely powdered polyvinyl chloride resin | 10 Parts by weight | Sumilit® PXQL (produced by Sumitomo Chemical Co., Ltd.) |
| Plasticizer : trioctyl trimellitate | 60 Parts by weight | No. 8 (produced by Kao Co., Ltd.) |
| Epoxidized soybean oil | 4 Parts by weight | O-130P (produced by Adeka-argus Co., Ltd.) |
| Stabilizer | Suitable amount | Shown in Tables 2 and 3. |
| Pigment (gray) | 4 Parts by weight | (Produced by Sumika Color Co., Ltd.) |

(2) Evaluation of resistance to mold staining

The resistance to mold staining was judged by the degree of yellowing on the mold after molding and the surface gloss (reflectance at 60°) of the formed sheet. An embossed nickel mold of 100 mm × 100 mm × 3 mm (thick) in size was heated on an electro-heating hot plate. When the temperature of the mold reached 220°C, the mold was taken out and 100 g of the powder composition was sprinkled over the mold and fusion-adhered thereto for 10 seconds. After removing the unfused powder, the nickel mold was again placed on the hot plate and heated for 30 seconds to complete fusion.

After cooling with ice, the formed sheet was peeled off the mold, and stain on the mold was observed. This procedure was repeated 300 times. The surface gloss (reflectance at 60°) of the formed sheet was judged macroscopically and measured by means of a glossmeter.

Table 2    Stabilizer system used in Examples

| Example No. | Ba/Zn salt type stabilizer | | | Perchlorate compound (part by weight) | Other addtives (part by weight) |
| --- | --- | --- | --- | --- | --- |
| | Stabilizer system | Amount added (part by weight) | Ba/Zn weight ratio | | |
| 1 | Barium oxalate / Zinc oxalate | 0.7 / 0.6 | 1.8/1.0 | 1.0 | |
| 2 | Barium malonate / Zinc malonate | 0.7 / 0.6 | 1.7/1.0 | 1.0 | |
| 3 | Barium maleate / Zinc maleate | 0.8 / 0.7 | 1.7/1.0 | 1.0 | |
| 4 | Barium tartrate / Zinc tartrate | 0.9 / 0.8 | 1.8/1.0 | 1.0 | |
| 5 | Barium benzoate / Zinc benzoate | 1.1 / 1.1 | 1.7/1.0 | 1.0 | |
| 6 | Barium p-tert-butylbenzoate / Zinc p-tert-butylbenzoate | 1.5 / 1.5 | 1.8/1.0 | 1.0 | |
| 7 | Barium benzoate / Zinc maleate | 1.1 / 0.7 | 1.6/1.0 | 1.0 | |

--Cont'd--

8

Table 2    Stabilizer system used in Examples (cont'd)

| Example No. | Ba/Zn salt type stabilizer | | | Perchlorate compound (part by weight) | Other addtives (part by weight) |
|---|---|---|---|---|---|
| | Stabilizer system | Amount added (part by weight) | Ba/Zn weight ratio | | |
| 8 | Barium maleate<br>Zinc benzoate | 0.8<br>1.1 | $1.9/1.0$ | 1.0 | |
| 9 | Barium maleate<br>Zinc benzoate | 0.8<br>1.1 | $1.9/1.0$ | 0.5 | |
| 10 | Barium maleate<br>Zinc benzoate | 0.8<br>1.1 | $1.9/1.0$ | 2.0 | |
| 11 | Barium maleate<br>Zinc benzoate | 0.8<br>1.1 | $1.9/1.0$ | 1.0 | Tris·nonylphenyl phosphite, 0.2 |
| 12 | Barium maleate<br>Zinc benzoate | 1.0<br>1.5 | $1.7/1.0$ | 1.0 | Tris·nonylphenyl phosphite, 0.2<br>Magnesium hydroxide, 0.2 |
| 13 | Barium maleate<br>Zinc benzoate | 0.8<br>1.1 | $1.9/1.0$ | Barium per-chlorate, 1.0 | |

Note : The perchlorate compound used in Examples 1 to 12 is a perchlorate ion type hydrotalcite compound.

EP 0 273 766 B1

Table 2    Stabilizer system used in Examples (cont'd)

| Example No. | Ba/Zn salt type stabilizer | | | Perchlorate compound (part by weight) | Other additives (part by weight) |
|---|---|---|---|---|---|
| | Stabilizer system | Amount added (part by weight) | Ba/Zn weight ratio | | |
| 14 | Barium maleate | 0.8 | $1.9/1.0$ | Barium perchlorate, 1.0 | |
| | Zinc benzoate | 1.1 | | | |
| 15 | Barium maleate | 0.8 | $1.9/1.0$ | Magnesium perchlorate, 0.5 Aluminium perchlorate, 0.5 | |
| | Zinc benzoate | 1.1 | | | |
| 16 | Barium maleate | 0.8 | $1.9/1.0$ | Magnesium perchlorate, 0.5 Sodium perchlorate, 0.5 | |
| | Zinc benzoate | 1.1 | | | |
| 17 | Barium maleate | 0.8 | $1.9/1.0$ | Perchlorate ion type hydrotalcite compound, 0.5 Magnesium perchlorate, 0.5 | |
| | Zinc benzoate | 1.1 | | | |
| 18 | Barium maleate | 0.8 | $1.9/1.0$ | Perchlorate ion type hydrotalcite compound, 0.5 Sodium perchlorate, 0.5 | |
| | Zinc benzoate | 1.1 | | | |

Table 3  Stabilizer system used in Comparative examples

| Compa-rative example No. | Ba/Zn salt type stabilizer | | | Perchlorate compound (part by weight) | Other addtives (part by weight) |
| --- | --- | --- | --- | --- | --- |
| | Stabilizer system | Amount added (part by weight) | Ba/Zn weight ratio | | |
| 1 | Barium octoate<br>Zinc octoate | 1.4<br>1.4 | 1.8/1.0 | – | |
| 2 | Barium octoate<br>Zinc octoate | 1.4<br>1.4 | 1.8/1.0 | 1.0 | |
| 3 | Barium octoate<br>Zinc octoate | 1.4<br>1.4 | 1.8/1.0 | 1.0 | Tris·nonylphenyl phosphite, 0.2 |
| 4 | Barium benzoate<br>Zinc benzoate | 1.1<br>1.1 | 1.7/1.0 | – | |
| 5 | Barium maleate<br>Zinc benzoate | 0.8<br>1.1 | 1.9/1.0 | – | |

Note : The perchlorate compound used in Comparative examples 2 and 3 is a perchlorate ion type hydrotalcite compound.

(3) Evaluation of amine resistance

The amine resistance test was carried out as follows :
A sheet 300 mm x 300 mm x 0.8 mm (thick) in size produced by powder molding was placed, with its embossed surface downwards, on an aluminum support frame 300 mm x 300 mm x 10 mm (thick) in size. Thereafter, 153 g of a total weight of a previously prepared polyol mixture and Polymeric MD having an NCO content of 30.5% in a former to latter weight ratio of 100 parts to 150 parts, said polyol mixture being prepared by mixing water, triethanolamine, triethylenediamine and polyol composed mainly of glycerin/propylene oxide adduct and glycerin/ethylene oxide adduct, was mixed on a high-speed mixer for 10 seconds, and the mixture was injected into the aluminum support frame, and then by clamping, a urethane foam was adhered to the back surface of the sheet.

This urethane-attached sheet was cut into test pieces 70 mm x 150 mm in size, and one group of four was placed in a Geer oven at an atmospheric temperature of 110°C and another in a Sunshine weather-O-meter wherein the the temperature of the black panel was 83°C, so that one test piece could be taken out every 100 hours. Thus, a 400-hour discoloration test was conducted.

(4) Result of elevation

The results of Examples 1 to 18 are shown in Tables 4 and 6, and those of Comparative examples 1 to 5 are shown in Tables 5 and 7.

Table 4    Evaluation of resistance to mold staining
and generation of surface gloss

| Number of conti-nuous shots | Evaluation of resistance to mold staining (Mold : embossed nickel plate) | | | | | |
|---|---|---|---|---|---|---|
| | 1 | 10 | 50 | 100 | 200 | 300 |
| Example-1 | O | O | O | O | O | O~△ |
| 2 | O | O | O | O | O | O~△ |
| 3 | O | O | O | O | O | O~△ |
| 4 | O | O | O | O | O | O~△ |
| 5 | O | O | O | O | O | O~△ |
| 6 | O | O | O | O | O | O~△ |
| 7 | O | O | O | O | O | O~△ |
| 8 | O | O | O | O | O | O~△ |
| 9 | O | O | O | O | O | O~△ |
| 10 | O | O | O | O | O | O~△ |
| 11 | O | O | O | O | O | O~△ |
| 12 | O | O | O | O | O | O~△ |
| 13 | O | O | O | O | O | O~△ |
| 14 | O | O | O | O | O | O~△ |
| 15 | O | O | O | O | O | O~△ |
| 16 | O | O | O | O | O | O~△ |
| 17 | O | O | O | O | O | O~△ |
| 18 | O | O | O | O | O | O~△ |

--Cont'd--

Note:   Standard of evaluation

(1)   Resistance to mold staining and macroscopic judgement of surface gloss

O   Little stain

△   Slight stain

X   Much stain

(2)   Glossmeter

A smaller value   indicates   less gloss.

Table 4    Evaluation of resistance to mold staining
and generation of surface gloss (Cont'd)

| Evaluation of generation of surface gloss | | | | | | | | | | | |
|---|---|---|---|---|---|---|---|---|---|---|---|
| Macroscopic judgement | | | | | | Glossmeter (%) | | | | | |
| 1 | 10 | 50 | 100 | 200 | 300 | 1 | 10 | 50 | 100 | 200 | 300 |
| O | O | O | O | O | O | 1.5 | 1.5 | 1.6 | 1.6 | 1.8 | 2.0 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.8 | 2.0 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.7 | 1.8 |
| O | O | O | O | O | O | 1.5 | 1.5 | 1.5 | 1.6 | 1.8 | 1.9 |
| O | O | O | O | O | O | 1.5 | 1.5 | 1.5 | 1.6 | 1.7 | 1.8 |

Table 5    Evaluation of resistance to mold staining

and generation of surface gloss

| | Evaluation of resistance to mold staining (Mold : embossed nickel plate) | | | | | |
|---|---|---|---|---|---|---|
| Number of continuous shots | 1 | 10 | 50 | 100 | 200 | 300 |
| Comparative example-1 | O | O | O | O~Δ | Δ | X |
| 2 | O | O | O | O~Δ | Δ | X |
| 3 | O | O | O | O~Δ | Δ | X |
| 4 | O | O | O | O | O | O~Δ |
| 5 | O | O | O | O | O | O~Δ |

Table 5    Evaluation of resistance to mold staining

and generation of surface gloss (Cont'd)

| Evaluation of generation of surface gloss | | | | | | | | | | | |
|---|---|---|---|---|---|---|---|---|---|---|---|
| Macroscopic judgement | | | | | | Glossmeter (%) | | | | | |
| 1 | 10 | 50 | 100 | 200 | 300 | 1 | 10 | 50 | 100 | 200 | 300 |
| O | O | O | O~Δ | O~Δ | Δ | 1.5 | 1.6 | 1.7 | 2.1 | 2.5 | 3.6 |
| O | O | O | O~Δ | O~Δ | Δ | 1.5 | 1.6 | 1.7 | 2.2 | 2.4 | 3.4 |
| O | O | O | O~Δ | O~Δ | Δ | 1.5 | 1.6 | 1.7 | 2.0 | 2.3 | 3.0 |
| O | O | O | O | O | O | 1.5 | 1.6 | 1.7 | 1.8 | 1.9 | 2.0 |
| O | O | O | O | O | O | 1.5 | 1.5 | 1.6 | 1.7 | 1.8 | 1.9 |

EP 0 273 766 B1

Table 6      Evaluation of amine resistance

| Time elapsed (hour) | Thermal resistance (Geer oven, 110 °C) | | | | Light fastness (Sunshine weather-O-meter, 83 °C) | | | |
|---|---|---|---|---|---|---|---|---|
| | 100 | 200 | 300 | 400 | 100 | 200 | 300 | 400 |
| Example 1 | 5 | 5 | 5-4 | 4 | 5 | 5 | 5-4 | 5-4 |
| " 2 | 5 | 5 | 5-4 | 4 | 5 | 5 | 5-4 | 5-4 |
| " 3 | 5 | 5 | 5-4 | 5-4 | 5 | 5 | 5-4 | 5-4 |
| " 4 | 5 | 5 | 5-4 | 4 | 5 | 5 | 5-4 | 5-4 |
| " 5 | 5 | 5 | 5-4 | 5-4 | 5 | 5 | 5-4 | 5-4 |
| " 6 | 5 | 5 | 5-4 | 5-4 | 5 | 5 | 5-4 | 5-4 |
| " 7 | 5 | 5 | 5-4 | 5-4 | 5 | 5 | 5-4 | 5-4 |
| " 8 | 5 | 5 | 5-4 | 5-4 | 5 | 5 | 5-4 | 5-4 |
| " 9 | 5 | 5 | 5-4 | 4 | 5 | 5 | 5-4 | 5-4 |
| " 10 | 5 | 5 | 5 | 5-4 | 5 | 5 | 5-4 | 5-4 |
| " 11 | 5 | 5 | 5-4 | 4 | 5 | 5 | 5-4 | 5-4 |
| " 12 | 5 | 5 | 5 | 5-4 | 5 | 5 | 5-4 | 5-4 |
| " 13 | 5 | 5-4 | 5-4 | 4 | 5 | 5-4 | 5-4 | 4 |
| " 14 | 5 | 5-4 | 5-4 | 4 | 5 | 5-4 | 5-4 | 4 |
| " 15 | 5 | 5-4 | 5-4 | 4 | 5 | 5-4 | 5-4 | 4 |
| " 16 | 5 | 5-4 | 5-4 | 4 | 5 | 5-4 | 5-4 | 4 |
| " 17 | 5 | 5-4 | 5-4 | 4 | 5 | 5-4 | 5-4 | 4 |
| " 18 | 5 | 5-4 | 5-4 | 4 | 5 | 5-4 | 5-4 | 4 |

Standard of evaluation:   Staining or change in color based on the gray scale.

Rating :    5   No change
         4   Slight but faint change
         3   Slight but clearly observable change
         2   Slightly marked change
         1   Fairly marked change

16

Table 7        Evaluation of amine resistance

| | Thermal resistance (Geer oven, 110°C) | | | | Light fastness (Sunshine weather-O-meter, 83°C) | | | |
|---|---|---|---|---|---|---|---|---|
| Time elapsed (hour) | 100 | 200 | 300 | 400 | 100 | 200 | 300 | 400 |
| Comparative example 1 | 5 | 4 | 4-3 | 3 | 5 | 5-4 | 4 | 4-3 |
| 2 | 5 | 5-4 | 5-4 | 4 | 5 | 5 | 5-4 | 5-4 |
| 3 | 5 | 5-4 | 5-4 | 5-4 | 5 | 5 | 5-4 | 5-4 |
| 4 | 5 | 4 | 4-3 | 3 | 5 | 5-4 | 4 | 4-3 |
| 5 | 5 | 4 | 4-3 | 3 | 5 | 5-4 | 4 | 4-3 |

**Claims**

1.  A polyvinyl chloride resin composition for powder molding having amine resistance and resistance to mold staining, the composition having blended therein, per 100 parts by weight of polyvinyl chloride resin, (a) 0.1 to 10 parts by weight a stabilizer mixture of barium and zinc carboxylic acid salts, the barium and zinc metallic weight ratio being 1:5 to 5:1, and (b) 0.1 to 10 parts by weight of metal perchlorate and/or perchlorate ion hydrotalcite compound selected from those of the formula:

    $$Mg_{1-x}Al_x(OH)_2.(ClO_4)_2.mH_2O$$

    wherein x is a number satisfying the equation $0 < x \leq 0.5$ and m represents a positive number of 5 or less
    characterized in that the barium and zinc carboxylic acid salts each have a melting point not lower than 250°C.

2.  A composition according to claim 1 wherein the barium salt stabilizer component is selected from barium oxalate, malonate, maleate, tartrate, benzoate, p-tert-butylbenzoate, succinate, glutarate, adipate, pimelate, suberate, azelate, sebacate, paratartrate, malate, acrylate, methacrylate, phthalate, isophthalate, terephthalate, salicylate, anthranilate, cinnamate, mandelate, $\alpha$-naphthoate and $\beta$-naphthoate.

3.  A composition according to claim 1 or 2 wherein the zinc salt stabilizer component is selected from zinc oxalate, malonate, maleate, tartrate, benzoate, p-tert-butylbenzoate, succinate, glutarate, adipate, pimelate, suberate, azelate, sebacate, paratartrate, malate, cinnamate, mandelate, $\alpha$-naphthoate and $\beta$-naphthoate.

4.  A powder composition according to any of claims 1 to 3 containing metal perchlorate selected from magnesium perchlorate, barium perchlorate, aluminium perchlorate and sodium perchlorate.

5.  The use in a powder molding process for a composition according to any of claims 1 to 4.

6.  A powder molded product of a composition according to any of claims 1 to 4.

**Patentansprüche**

1. Polyvinylchloridharz-Zusammensetzungfür Pulverschmelzverfahrenmit Aminbeständigkeit und Beständigkeit gegen Verschmutzung in der Form beim Verarbeiten, wobei die Zusammensetzung pro 100 Gewichtsteile Polyvinylchloridharz darin vermischt enthält: (a) 0,1 bis 10 Gewichtsteile eines Stabilisiergemischs von Barium- und Zink-Carbonsäuresalzen, wobei das Gewichtsverhältnis von Barium und metallischem Zink 1:5 bis 5:1 ist, und (b) 0,1 bis 10 Gewichtsteile Metallperchlorat und/oder eine Perchloration-Hydrotalcit-Verbindung ausgewählt aus denen der Formel:

$$Mg_{1-x}Al_x(OH)_2 \bullet (ClO_4)_2 \bullet mH_2O,$$

wobei x eine Zahl ist, die die Gleichung $0 < x \leq 0,5$ erfüllt und m eine positive Zahl von 5 oder weniger darstellt,
dadurch gekennzeichnet, daß die Barium- und Zink-Carbonsäuresalze jeweils einen Schmelzpunkt nicht niedriger als 250 °C haben.

2. Zusammensetzung nach Anspruch 1, wobei der Bariumsalz-Stabilisiererbestandteil ausgewählt ist aus Bariumoxalat, -malonat, -maleat, - tartrat, -benzoat, -p-tert-butylbenzoat, -succinat, -glutarat, -adipat, -pimelat, -suberat, -azelat, -sebazat, -paratartrat, -malat, -acrylat, -methacrylat, -phthalat, -isophthalat, -terephthalat, -salicylat, -anthranilat, -cinnamat, -mandelat, -$\alpha$-naphthoat und -$\beta$-naphthoat.

3. Zusammensetzung nach Anspruch 1 oder 2, wobei der Zinksalz-Stabilisiererbestandteilausgewählt ist aus Zinkoxalat, -malonat, -maleat, -tartrat, -benzoat, -p-tert-butylbenzoat, -succinat, -glutarat, -adipat, -pimelat, -suberat, -azelat, -sebazat, -paratartrat, -malat, -cinnamat, - mandelat, -$\alpha$-naphthoat und -$\beta$-naphthoat.

4. Pulverzusammensetzung nach einem der Ansprüche 1 bis 3, wobei diese ein Metallperchlorat ausgewählt aus Magnesiumperchlorat, Barumperchlorat, Aluminiumperchlorat und Natriumperchlorat umfaßt.

5. Verwendung einer Zusammensetzung nach einem der Ansprüche 1 bis 4 in einem Pulverschmelz- bzw. Pulversinterverfahren.

6. Pulverformprodukt einer Zusammensetzung nach einem der Ansprüche 1 bis 4.

**Revendications**

1. Composition de résine de polymère de chlorure de vinyle pour le moulage de poudres, présentant une résistance aux amines et une résistance à la formation de taches sur le moule, ladite composition renfermant en mélange, pour 100 parties en poids de la résine de polymère de chlorure de vinyle, (a) 0,1 à 10 parties en poids d'un mélange stabilisant de sels d'acides carboxyliques de baryum et de zinc, le rapport pondéral du baryum métallique au zinc métallique étant compris dans l'intervalle de 1:5 à 5:1, et (b) 0,1 à 10 parties en poids d'in perchlorate métallique et/ou d'une hydrotalcite renfermant l'ion perchlorate, choisie entre les composés de formule :

$$Mg_{1-x}Al_x(OH)_2 . (ClO_4)_2 . mH_2O$$

dans laquelle x représente un nombre satisfaisant l'équation $0 < x \leq 0,5$ et m représente un nombre positif égal ou inférieur à 5, caractérisée en ce que les sels d'acides carboxyliques de baryum et de zinc possèdent chacun un point de fusion non inférieur à 250 °C.

2. Composition suivant la revendication 1, dans lequel le constituant stabilisant formé de sel de baryum est choisi entre les oxalate, malonate, maléate, tartrate, benzoate, p-tertiobutylbenzoate, succinate, glutarate, adipate, pimélate, subérate, azélate, sébacate, paratartrate, malate, acrylate, méthacrylate, phtalate, isophtalate, téréphtalate, salicylate, anthranilate, cinnamate, mandélate, $\alpha$-naphtoate et $\beta$-naphtoate de baryum.

3. Composition suivant la revendication 1 ou 2, dans laquelle le constituant stabilisant formé de sel de zinc est choisi entre les oxalate, malonate, maléate, tartrate, benzoate, p-tertiobutylbenzoate, succinate, glutarate, adipate, pimélate, subérate, azélate, sébacate, paratartrate, malate, cinnamate, mandélate, $\alpha$-naphtoate et $\beta$-naphtoate de zinc.

4. Composition de poudre suivant l'une quelconque des revendications 1 à 3, contenant un perchlorate métallique choisi entre le perchlorate de magnésium, le perchlorate de baryum, le perchlorate d'aluminium et le perchlorate de sodium.

5. Utilisation dans un procédé de moulage de poudre d'une conposition suivant l'une quelconque des revendications 1 à 4.

6. Produit obtenu par moulage d'une poudre d'une composition suivant l'une quelconque des revendications 1 à 4.